# FASCICULE DE BREVET EUROPEEN

(11) **EP 2 588 327 B1**
(45) Date de publication et mention de la délivrance du brevet: **13.08.2014**
(21) Numéro de dépôt: 11730262.0
(22) Date de dépôt: 29.06.2011
(51) Int. Cl.: B60C 11/04

(54) **BANDE DE ROULEMENT A BRUIT DE ROULAGE REDUIT**
REIFENPROFIL MIT VERRINGERTEM ROLLGERÄUSCH
TREAD, THE ROLLING NOISE OF WHICH IS REDUCED

(30) Priorité: 29.06.2010 FR 1055192
(43) Date de publication de la demande: 08.05.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BOURNAT, Alexis, F-63040 Clermont-Ferrand Cedex 09 (FR); FOUCHER, Benoit, F-63040 Clermont-Ferrand Cedex 09 (FR); MARTIN, Didier, Michel, F-63040 Clermont-Ferrand Cedex 09 (FR); QUANTINET, Benjamin, F-63040 Clermont-Ferrand Cedex 09 (FR)
(74) Mandataire: Diernaz, Christian
(86) Numéro de dépôt international: PCT/EP2011/060883
(87) Numéro de publication internationale: WO 2012/001031

(56) Documents cités:
- DE-A1-102006 031 779
- FR-A- 1 305 928
- JP-A- 7 017 216

## Description

### DOMAINE DE L'INVENTION

La présente invention concerne les bandes de roulement de pneus pour véhicules poids lourd et plus particulièrement les pneus destinés à équiper l'essieu moteur.

### ÉTAT DE LA TECHNIQUE

Les pneus pour véhicule poids lourd doivent satisfaire à plusieurs exigences en terme de performance et notamment une performance en adhérence et une performance en directivité (capacité à suivre une trajectoire donnée). Dans ce but, il est usuel de pourvoir la bande de roulement d'un pneu avec une pluralité de rainures d'orientation générale circonférentielle, ces rainures délimitant une pluralité de nervures continues. Ces rainures servent à la fois de canaux pour drainer l'eau recouvrant une chaussée par temps de pluie et également de volume disponible pour stocker au moins temporairement un certain volume d'eau. Dans le cas des pneus montés sur essieu moteur d'un véhicule, les pneus sont en outre soumis à des couples moteur qu'il est essentiel de pouvoir transmettre par l'intermédiaire des pneus à la chaussée sur laquelle roule le véhicule. En conséquence il est connu de prévoir un dessin de sculpture de bande de roulement qui présente des continuités circonférentielles ; ceci est atteint par la présence de nervures continues dans la direction circonférentielle.

Une autre des exigences à satisfaire en matière de performances techniques d'un pneu concerne le bruit que génère ce pneu lors d'un roulage et notamment le bruit de résonance à l'intérieur des rainures lors du contact avec la chaussée.

Cette performance est déterminée dans des tests normalisés de mesure du bruit émis lors d'un roulage sans couple (« *coast-by* ») et avec couple (« *drive-by* »). Dans ces tests on mesure le niveau de bruit lors du passage d'un véhicule à une distance de 7.5m. Ces tests sont décrits dans les documents suivants : Directive 2001/43/CE, ISO13325 (2003), ISO362-1 (2007), ISO362-1 (2007) COR1 (2009), ISO 362-2 (2009).

De façon connue, voir notamment le document WO2009084666A, il est possible de réduire le bruit de résonance dans les rainures circonférentielles en pourvoyant lesdites rainures avec une pluralité de plots ou protubérances portées par le fond des rainures ou les parois latérales desdites rainures. Toutefois, pour être pleinement efficaces en réduction du bruit en roulage, il faut que ces plots occupent toute la section transversale de ces rainures ou à tout le moins une grande partie de leur section. En faisant de la sorte, il est clair que la performance de drainage diminue sensiblement.

Concilier ces deux performances pour un même dessin de bande de roulement est le problème que la présente invention se propose de résoudre.

Le document WO2009084666A montre un pneu dont la bande de roulement comprend une pluralité de rainures d'orientation générale circonférentielle et de rainures d'orientation transversale, ces rainures délimitant des blocs de matière. Pour atténuer le bruit en roulage il est prévu de placer dans certaines rainures circonférentielles une pluralité de protubérances destinées à obturer en grande partie la section transversale desdites rainures transversales. Chaque protubérance est localisée en regard d'une rainure transversale.

Ce type de dessin de bande de roulement appliqué à un pneu pour véhicule poids lourd est incompatible avec une bonne performance en usure puisqu'il conduit à la présence de blocs qui sont susceptibles de générer une usure irrégulière, c'est-à-dire une usure qui n'est plus homogène et régulière sur toute la surface de roulement du pneu.

Le document DE-A-10 2006 031 779 montre un pneu comprenant les caractéristiques du préambule de la revendication 1.

### Définitions :

Une incision est une découpure prévue pour se fermer lors du passage dans le contact avec la chaussée.

Un bloc est un élément en relief formé sur la bande de roulement qui est délimité par des creux ou rainures et comprenant des parois latérales et une face de contact destinée à venir en contact avec la chaussée.

Par direction radiale, on entend dans le présent document une direction qui est perpendiculaire à l'axe de rotation du pneu (cette direction correspond à la direction de l'épaisseur de la bande de roulement).

Par direction axiale ou transversale, on entend une direction parallèle à l'axe de rotation du pneu.

Par direction circonférentielle, on entend une direction qui est perpendiculaire à la fois à la direction axiale et à une direction radiale.

Par axialement vers l'extérieur, on entend une direction qui est orientée vers l'extérieur de la cavité interne du pneu.

Plan équatorial : plan perpendiculaire à l'axe de rotation et passant par les points du pneu axialement les plus à l'extérieur, ce plan équatorial divisant virtuellement le pneu en deux moitiés sensiblement égales.

### BREF EXPOSE DE L'INVENTION

La présente invention vise à obtenir un pneu pour équiper un véhicule poids lourd qui présente à la fois une bonne performance en bruit de roulage et une usure homogène sur l'ensemble de sa surface de roulement.

A cet effet, l'invention a pour objet un pneu pour véhicule poids lourd, ce pneu comprenant une bande de roulement dont une surface de roulement est prévue pour venir en contact avec une chaussée, cette bande de roulement comprenant une pluralité de rainures circonférentielles délimitant des nervures intermédiaires et deux nervures de bords. Chaque nervure a une largeur minimale Ln et comprend deux parois latérales et une face de contact destinée à venir en contact avec une chaussée, chaque rainure circonférentielle comprenant une pluralité de protubérances formés en saillie sur au moins une paroi latérale délimitant cette rainure afin d'obstruer en partie la section transversale de la rainure circonférentielle considérée. Cette bande de roulement est caractérisée en ce que :

- en vis-à-vis de chaque plot est prévue, sur la nervure adjacente délimitant la rainure considérée, une entaille semi fermée de longueur axiale La au plus égale à 60% de la largeur minimale Ln de cette nervure (cette largeur minimale étant mesurée entre deux creux de la même nervure quand il y en a), cette entaille semi fermée d'une largeur Le au plus égale à la largeur Lr de la rainure étant orientée de façon à faire un angle moyen B au moins égal à 10 degrés avec la direction principale de la protubérance avec laquelle cette entaille coopère,

- et en ce que chaque protubérance ferme la section de la rainure dans laquelle elle est formée sur au moins 30 % et au plus 75% de la surface de ladite section,

- et en ce qu'il est ménagé un jeu fonctionnel entre la protubérance et les parois délimitant l'entaille avec laquelle cette protubérance est destinée à coopérer, afin de permettre le passage de fluide notamment lors d'un roulage sur chaussée revêtue d'eau.

Grâce à cette combinaison, il est possible de réduire le bruit de résonance généré dans les rainures au passage dans le contact avec la chaussée en combinant à la fois une réduction de section transversale par la présence de plots bouchant en partie lesdites rainures et un volume servant à la fois de résonateur et de stockage pour l'eau. Il est en outre essentiel que chaque protubérance présente une orientation moyenne différente de l'orientation moyenne de l'entaille qui est placée en vis-à-vis et que cette protubérance laisse un passage suffisant entre elle même et les parois de ladite entaille. La longueur de l'entaille est déterminée pour ne pas trop affecter la rigidité de la nervure sur laquelle elle est réalisée. En outre, le volume de chaque entaille est déterminé pour conférer un volume approprié au stockage au moins en partie de l'eau circulant dans la rainure dans laquelle débouche ladite entaille. Ainsi, il est à la fois possible de réduire le bruit généré dans chaque rainure en combinant à la fois une fermeture partielle de chaque rainure par un nombre approprié de protubérances ne fléchissant pas sous la seule pression de l'air et la présence d'une sorte de cavité jouant le rôle de résonateur dont le volume est approprié pour contrecarrer certaines fréquences de résonance.

Préférentiellement, les nervures intermédiaires sont dépourvues de rainures transversales s'ouvrant dans deux rainures circonférentielles.

Préférentiellement chaque protubérance ferme la section de la rainure dans laquelle elle est formée sur au moins 50 % et au plus 75% de la surface de ladite section et encore plus préférentiellement entre 65% et 75% (bornes comprises).

Au delà de 75% il se produit une réduction trop importante de la circulation de liquide dans la rainure en cas de roulage sur sol revêtu d'eau.

Préférentiellement une bande de roulement selon l'invention comprend une pluralité de rainures circonférentielles en zigzag délimitant des nervures intermédiaires et deux nervures de bords présentant une succession de pointes et de creux dans la direction circonférentielle, les protubérances dans chaque rainure étant formés au niveau des pointes pour obstruer en partie la section transversale de la rainure circonférentielle considérée tandis que les entailles sont formées pour déboucher dans les creux.

Il est avantageux que les protubérances aient des dimensions appropriées pour ne pas fléchir sous l'action d'un écoulement d'eau dans les rainures afin de diriger le flux vers les entailles semi fermées.

De façon préférentielle, le nombre de protubérances par rainure est tel qu'au moins quatre protubérances et quatre entailles semi fermées sont présentes en permanence dans le contact avec la chaussée.

De façon préférentielle, le jeu fonctionnel entre chaque protubérance et les parois de l'entaille semi fermée avec laquelle cette protubérance coopère est au total au moins égal à la largeur Lr de la rainure dans laquelle sont formées des protubérances. Par « au total », il faut comprendre la somme des jeux de chaque côté d'une protubérance.

Avantageusement, les protubérances ont une rigidité appropriée pour ne pas s'effacer ou fléchir sous l'effet de la pression exercée par l'eau lors de la circulation de l'eau dans les rainures. De cette façon et aussi grâce au jeu fonctionnel entre chaque protubérance et la nervure en vis-à-vis, on peut dévier le flux de liquide en direction de l'entaille semi fermée, laquelle forme une sorte de réservoir pour stocker temporairement une quantité de liquide. C'est cette même quantité de liquide qui est empêchée de circuler dans la rainure circonférentielle à cause de la présence des protubérances.

Préférentiellement, chaque protubérance s'étend entre le fond d'une rainure et la surface de roulement à l'état neuf, la base de cette protubérance étant plus proche de la paroi de la nervure opposée délimitant la même nervure que la partie la plus à l'extérieur de la même protubérance afin de générer une arête avant inclinée. La base de chaque protubérance peut se prolonger vers l'extérieur par une première partie de longueur constante avant de se réduire progressivement jusqu'à la surface de roulement. Il est avantageux que la longueur de la base Lpi de chaque protubérance soit au moins égale à 60% de la largeur de la rainure Lr dans laquelle elle est formée et la longueur axiale Lps de la partie la plus à l'extérieur de la protubérance soit au moins égale à 20% et au plus égale à 50% de la même largeur de rainure Lr. Ces pourcentages sont donnés lorsque le pneu est neuf c'est-à-dire n'a pas encore été utilisé.

L'invention est particulièrement efficace dès lors qu'il est prévu au moins quatre protubérances et au plus une vingtaine de protubérances par rainure de manière permanente dans le contact du pneu avec la chaussée par rainure. Ces chiffres s'entendent aux conditions d'utilisation du pneu telles que définies par la norme E.T.R.T.O. c'est-à-dire à la pression de gonflage de référence correspondant à la capacité de charge du pneu indiquée par son indice de charge et son code vitesse.

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 représente une vue en plan d'une bande de roulement d'un pneu selon l'invention comprenant des rainures circonférentielles rectilignes ;
La figure 2 représente une vue en coupe selon la ligne II-II prise sur la figure 1 ;
La figure 3 montre une autre variante d'une bande de roulement d'un pneu selon l'invention comprenant des rainures en zigzag ;
La figure 4 montre pour cette dernière variante une vue locale.

### DESCRIPTION DES FIGURES

Pour faciliter la lecture des figures, des mêmes signes de référence peuvent être employés pour la description de variantes de l'invention dès lors que ces signes de référence renvoient à des éléments d'une même nature qu'elle soit structurelle ou bien fonctionnelle.

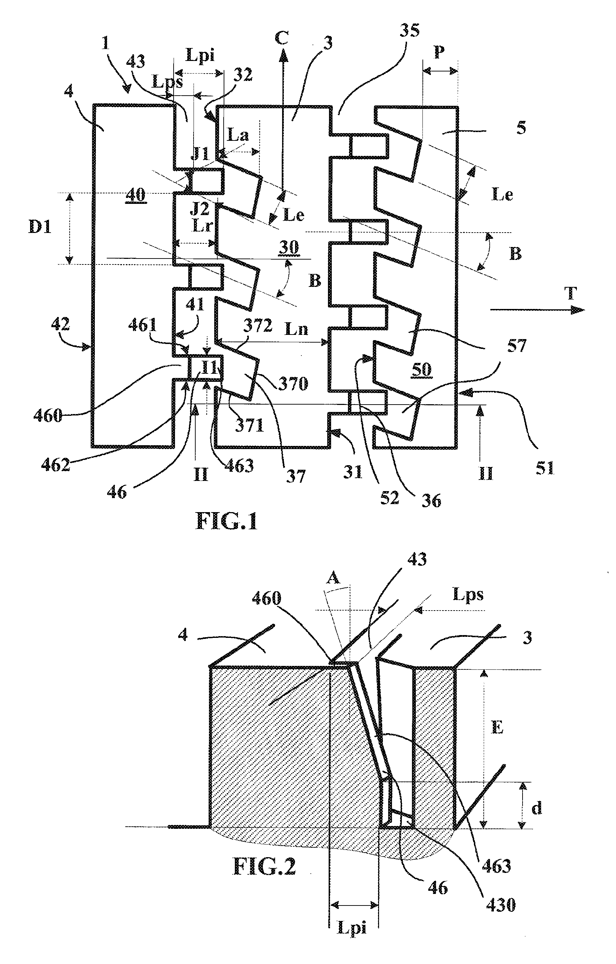

La figure 1 représente une vue en plan d'une bande de roulement d'un pneu selon l'invention comprenant des rainures circonférentielles rectilignes. Sur cette figure 1, on voit une vue partielle en plan d'une bande de roulement 1 comprenant trois nervures délimitant deux rainures 43, 35 rectilignes d'orientation circonférentielle. La direction circonférentielle est indiquée par la flèche C. Parmi les nervures, on distingue une nervure intermédiaire 3 et des nervures bord 4, 5.

Chaque nervure 3, 4, 5 comprend des faces de contact 30, 40, 50 respectivement, destinées à venir en contact avec une chaussée pendant le roulage et des faces latérales 31, 32, 41, 42, 51, 52 respectivement, ces faces latérales coupant lesdites faces de contact pour former des arêtes orientées circonférentiellement.

Pour atténuer le bruit de résonance généré par la vibration de la colonne d'air emprisonnée dans chaque rainure circonférentielle 43, 35, on pourvoit chaque rainure avec une combinaison d'une pluralité de protubérances et d'une pluralité d'entailles semi fermées. Chaque protubérance est destinée à coopérer avec une entaille semi fermée en vis-à-vis, c'est-à-dire localisée de manière à faire face à ladite protubérance (virtuellement en prolongeant la protubérance selon son axe principal, ladite protubérance rentrerait dans l'entaille semi fermée).

La paroi latérale 41 de la rainure bord 4 comprend une pluralité de protubérances 46 distantes les unes des autres d'une distance D1 dans la direction circonférentielle. Dans le cas présent, ces protubérances 46 sont orientées de manière à être perpendiculaire à la paroi latérale 41 de la nervure 4 (ces protubérances sont en conséquence perpendiculaires à la surface de paroi 41). La distance D1 est choisie de manière à ce qu'il y ait au moins quatre protubérances 46 dans le contact avec une chaussée aux conditions d'utilisation. Chaque protubérance 46 comprend une face externe 460 destinée à venir en contact avec la chaussée pendant le roulage (dans l'exemple décrit, cette face externe 460 se trouve au niveau de la face de contact 40 de la nervure bord 4). Chaque protubérance 46 a une longueur Lps en surface mesurée à l'état neuf du pneu dans la direction principale de ladite protubérance (c'est-à-dire dans le cas présent dans une direction perpendiculaire à la face latérale 41) et une longueur Lpi mesurée au fond de la rainure 43.

Préférentiellement, la longueur Lps de la face supérieure de chaque protubérance est comprise entre 20% et 50% de la largeur Lr de la rainure dans laquelle cette protubérance est formée. Par ailleurs, la longueur de la base Lpi de la protubérance 46 (longueur de la partie de la protubérance en fond de rainure) est au moins égale à 60% (à neuf) de la largeur Lr de la rainure.

Chaque protubérance, comme on peut le voir aussi sur la figure 2 - représentant une vue en coupe selon la ligne II-II prise sur la figure 1, s'étend entre le fond 430 de la rainure 43 et la face de contact 40 de la nervure bord 4. La longueur Lps de la protubérance 46 est inférieure à la longueur LPi de la même protubérance mesurée au fond de la rainure 43. Dans le cas présent, cette protubérance 46 obture la section de la rainure 43 sur 75% de ladite section. L'épaisseur I1 des protubérances 46 (mesurée dans la direction circonférentielle) est ici identique pour toutes les protubérances et constante dans toute la hauteur desdites protubérances.

Chaque protubérance 46 comprend des faces latérales 461, 462 distantes l'une de l'autre de l'épaisseur I1 de la protubérance ; ces deux faces latérales se rejoignent en une face d'extrémité 463 qui est inclinée avec un angle A proche de 30 degrés par rapport à une direction radiale (c'est-à-dire une direction passant par l'axe de rotation du pneu). Préférentiellement, cette épaisseur I1 est comprise entre 15% et 40% de la largeur Lr de la rainure 43 dans laquelle est réalisée la protubérance. Chaque protubérance comprend une partie proche du fond 430 de rainure qui est orientée radialement ; cette partie s'étend sur une hauteur d qui est ici égale à 20% de la profondeur de la rainure (préférentiellement cette hauteur est inférieure à 50% de cette profondeur).

Chaque protubérance 46 a une orientation principale déterminée sur la face externe 460 comme la direction de la droite reliant un point médian de ladite face pris sur la nervure portant la protubérance et un point d'extrémité sur la même face externe 460 le plus éloigné de ladite nervure.

En vis-à-vis de chaque protubérance, il est réalisé sur la nervure intermédiaire 3 une entaille semi fermée, c'est-à-dire une entaille 37 ne s'ouvrant que sur une face latérale 31 de la nervure 3, cette face latérale 31 faisant face à la face latérale 41 sur laquelle sont formées les protubérances 46 décrites plus haut. Chaque entaille 37 présente une orientation principale inclinée d'un angle B avec la direction axiale (cette direction axiale indiquée par la flèche T sur la figure étant perpendiculaire à la direction circonférentielle C) ; cette orientation principale de l'entaille 37 est déterminée comme la moyenne des orientations des parois 371, 372 délimitant ladite entaille. Cet angle B mesure l'écart d'orientation entre l'orientation principale de la protubérance et l'orientation principale de l'entaille semi fermée. Avantageusement, cet écart d'orientation est supérieur à zéro degré et au plus égal à 70 degrés. Dans le cas montré la protubérance est orientée selon la direction transversale T ; on peut bien entendu incliner cette protubérance avec un angle faible (inférieur à 30 degrés) et dans ce cas maintenir un écart angulaire suffisant avec l'entaille semi fermée avec laquelle elle coopère.

Cette entaille semi fermée 37 est précisément fermée par une paroi d'extrémité 370 qui relie les deux parois latérales 371, 372. La largeur Le de chaque entaille 37 est appropriée pour que chaque entaille 37 s'ouvre sur la rainure 43 et forme un volume de stockage supérieur au volume occupé par la protubérance 46 avec laquelle elle coopère.

Grâce aux jeux fonctionnels J1 et J2 séparant les points les plus proches de la face supérieure 460 de chaque protubérance de la face latérale 32 de la nervure intermédiaire 3, il est possible lors d'un roulage sur chaussée revêtue d'eau de remplir l'entaille semi fermée avec l'eau circulant dans la rainure 43. Ce stockage est temporaire puisque dès que l'entaille n'est plus fermée par la chaussée, l'eau contenue dans cette entaille est éjectée par centrifugation.

Comme cela est visible sur la figure 1, l'autre rainure 35 est elle aussi pourvue d'une pluralité de protubérances 36 formées sur la face latérale 32 de la nervure intermédiaire 3. Ces protubérances 36 sont destinées à coopérer avec une pluralité d'entailles semi fermées 57 formées sur la nervure bord 5. Les caractéristiques géométriques de ces protubérances 36 sont semblables à celles des protubérances 46.

Que ce soit pour la rainure 43 ou la rainure 35, les protubérances 46, 36 respectivement sont distantes circonférentiellement d'une même distance moyenne D1.

Que ce soit sur la nervure intermédiaire 3 ou la nervure bord 5, les entailles semi fermées 37, 57 respectivement occupent partiellement la largeur desdites nervures de manière à réserver une largeur assurant la continuité des nervures et évitant ainsi la fermeture desdites entailles lors du passage dans le contact avec la chaussée.

Sur cette variante montrée avec les figures 1 et 2, les nervures sont dépourvues de rainures transversales débouchant dans deux rainures circonférentielles; dans une variante non montrée ici, on peut avoir, outre les rainures s'ouvrant sur une seule rainure et en face des protubérances, des rainures débouchant dans deux rainures circonférentielles. On peut en outre prévoir la présence d'incisions de géométrie appropriée pour créer un blocage mécanique d'une paroi contre la paroi en vis-à-vis.

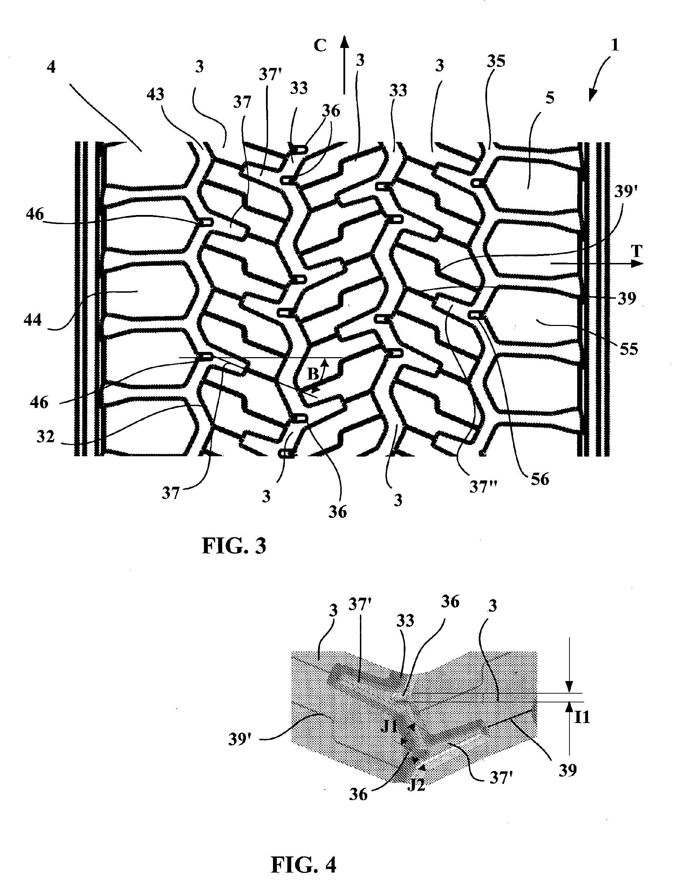

La figure 3 montre une autre variante d'une bande de roulement d'un pneu selon l'invention comprenant des rainures en zigzag.

La figure 3 montre la surface de roulement d'une bande de roulement 1 d'un pneu de dimension 245/70 R 17.5 pourvue avec quatre rainures circonférentielles 43, 33, 35 ayant une géométrie en zigzag formé d'une succession de pointes et de creux. Ces rainures zigzag délimitent trois nervures intermédiaires 3 et deux rangées 4, 5 formant les bords de la bande de roulement.

Les rangées de bord 4, 5 sont pourvues en outre avec des rainures transversales pour former une pluralité de blocs 44, 55 respectivement. Les rainures circonférentielles 43, 35 délimitant les nervures de bord 4, 5 ont une largeur moyenne égale à 7 mm et 8 mm pour les autres rainures (mesurée perpendiculairement aux nervures ou blocs adjacents) est pourvue avec une pluralité de dispositifs selon l'invention pour réduire le bruit de résonance en roulage tout en conservant une bonne performance de drainage de l'eau lors d'un roulage sur chaussée revêtue d'eau. Dans le cas présent, les nervures intermédiaires 3 ou les blocs des rangées bord présentent des pointes et des creux en alternance dans la direction circonférentielle. Dans chaque rainure, un dispositif antibruit est composé d'une protubérance 46, 36, 56 formée sur une pointe et d'une entaille semi fermée 37, 37', 37" s'ouvrant en vis-à-vis de ladite protubérance afin de pouvoir coopérer avec elle pour réduire le bruit de résonance et assurer un stockage de liquide approprié.

Aux conditions nominales d'usage de ce pneu, c'est-à-dire à une pression de gonflage égale à 8 bars et sous une charge de 2240 kg, la longueur moyenne de l'empreinte de contact (172 mm) détermine le nombre de ces dispositifs antibruit sur la bande de roulement. En effet, pour avoir un effet antibruit, il est nécessaire de modifier la fréquence de résonance des rainures en s'assurant que chaque rainure présente dans le contact au moins un dispositif antibruit (un dispositif comprenant une protubérance et une entaille semi fermée). Dans le cas présent, chaque protubérance 46, 36, 56 obture la section de la rainure dans laquelle elle est formée sur environ 50 % de ladite section. Chaque protubérance 46, 36, 56 s'étend entre le fond de la rainure et la surface de roulement de la bande à l'état neuf. Dans le cas présent, on a 4 dispositifs antibruit dans les rainures bords et 9 dispositifs antibruit dans les rainures intermédiaires en permanence dans le contact (préférentiellement, on prévoit entre 4 et 12 plots par rainures dans l'aire de contact.

Toutes les protubérances 46, 36, 56 ont les mêmes dimensions géométriques dans le cas présent. La longueur Lps de chaque protubérance 46 mesurée sur la surface de roulement est inférieure à la longueur LPi de la même protubérance mesurée au fond de la rainure 43. dans le cas présent la longueur Lps est égale à 30% de la largeur de rainure (préférentiellement entre 20 et 50%) et la longueur Lpi est égale à 60% de la largeur de rainure (préférentiellement supérieure à 50%).

L'épaisseur de chaque protubérance (mesurée dans la direction circonférentielle) est ici identique pour toutes les protubérances et constante sur toute la hauteur desdites protubérances. Cette épaisseur est en moyenne de 2 mm.

Par ailleurs et en vis-à-vis de chaque protubérance 46, il est réalisé sur chaque nervure intermédiaire 3 une entaille semi fermée, c'est-à-dire une entaille semi fermée 37 ne s'ouvrant axialement que sur une face latérale 32 de la nervure 3, cette face latérale 32 faisant face à la face latérale sur laquelle sont formées les protubérances mentionnées plus haut. Chaque entaille 37 présente une orientation principale inclinée d'un angle B avec la direction axiale (cette direction axiale indiquée par une flèche T sur la figure 3 étant perpendiculaire à la direction circonférentielle C). Cet angle B mesure l'écart d'orientation entre l'orientation principale de la protubérance et l'orientation principale de l'entaille semi fermée. Dans le cas présent cet angle B vaut 23 degrés (de façon préférentielle, cet angle est compris entre 10 et 50 degrés).

Dans l'exemple décrit avec le support de cette figure 3, on voit que les deux rainures 33 les plus proches du plan équatorial ont un plus grand nombre de dispositifs antibruit comparativement au nombre de dispositifs dans les rainures plus proches des rangées de bord (ici le nombre est plus que doublé). Grâce à ces dispositifs, on peut modifier les fréquences propres de résonance des rainures et il est avantageux que ces fréquences soient différentes entre les rainures de la partie médiane de la bande de roulement (de part et d'autre du plan équatorial) et les rainures voisines des bords de la bande de roulement. Sur chacune des deux rainures les plus proches du plan équatorial les protubérances (et les entailles semi fermées qui coopèrent avec ces protubérances) sont formées en alternance sur une paroi délimitant ladite rainure et sur l'autre paroi en vis-à-vis. L'avantage supplémentaire de cette configuration est de ne pas dégrader la résistance mécanique aux agressions des bords de la bande de roulement par la mise en oeuvre d'un nombre réduit de dispositifs antibruit selon l'invention.

La figure 4 montre pour cette dernière variante une vue locale en élévation. Sur cette figure 4 on voit une partie d'une rainure 33 entre deux nervures 3. de façon alternée, il est formé une protubérance 36 sur une pointe d'une nervure 3 et en combinaison une entaille semi fermée 37', cette entaille 37' se prolongeant par une incision 39 dont les parois ont des géométries en zigzag pour coopérer entre elle lors du passage dans le contact. Il est en outre prévu une incision 39' traversant en totalité la largeur de chaque nervure 3.

La largeur moyenne de chaque protubérance est ici égale à 25% de la largeur de l'entaille semi fermée (préférentiellement comprise entre 15% et 40%) soit environ 2 mm. Le jeu total entre chaque protubérance et la nervure voisine est supérieur à la largeur de la rainure circonférentielle (dans le cas de cette variante le jeu total vaut 9 mm).

La longueur axiale de l'entaille semi fermée 37' est sensiblement égale à la moitié de la largeur de la nervure dans laquelle elle est formée (par longueur axiale on entend la longueur de la projection de l'entaille sur la direction axiale T).

On note en outre sur figure 3 que les entailles semi fermées sont sur une même nervure orientée de la même manière et qu'elles sont inclinées de façon opposée sur deux nervures voisines 3. Ainsi le dessin de la bande de roulement n'est pas directionnel, c'est-à-dire qu'il n'impose pas de sens préférentiel de roulage. Bien entendu la personne du métier peut mettre en oeuvre cette invention pour un dessin qui soit directionnel par des inclinaisons appropriées des entailles semi fermées.

Sur les bords on prévoit en outre que les blocs soient reliés entre eux par des ponts de matière afin d'avoir un bord sensiblement continu.

Bien entendu, l'invention n'est pas limitée aux exemples décrits et représentés et diverses modifications peuvent y être apportées tout en restant dans la portée des revendications.

## Revendications

1. Pneu pour essieu véhicule poids lourd comprenant une bande de roulement (1) dont une surface de roulement est prévue pour venir en contact avec une chaussée, cette bande de roulement comprenant une pluralité de rainures circonférentielles (43, 33, 35) délimitant des nervures intermédiaires (3) et deux nervures de bords (4, 5), chaque nervure ayant une largeur minimale Ln et comprenant deux parois latérales et une face de contact destinée à venir en contact avec une chaussée, chaque rainure circonférentielle (43, 33, 35) comprenant une pluralité de protubérances (46, 36, 56) formés en saillie sur au moins une paroi latérale délimitant cette rainure afin d'obstruer en partie la section transversale de la rainure circonférentielle considérée,
• en vis-à-vis de chaque protubérance (46, 36, 56) étant prévue, sur la nervure adjacente délimitant la rainure considérée, une entaille semi fermée (37, 37', 37", 57) de longueur axiale La au plus égale à 60% de la largeur minimale Ln de cette nervure, cette entaille semi fermée d'une largeur Le au plus égale à la largeur Lr de la rainure étant orientée de façon à faire un angle moyen B au moins égal à 10 degrés avec la direction principale de la protubérance avec laquelle cette entaille coopère,
• chaque protubérance (46, 36, 56) fermant la section de la rainure dans laquelle elle est formée sur au moins 30 % et au plus 75% de la surface de ladite section
• et un jeu fonctionnel (J1, J2) étant ménagé entre la protubérance (46, 36, 56) et les parois délimitant l'entaille semi fermée (37, 37', 37", 57) avec laquelle cette protubérance est destinée à coopérer, afin de permettre le passage de fluide notamment lors d'un roulage sur chaussée revêtue d'eau,
cette bande de roulement étant **caractérisée en ce que**: les nervures intermédiaires sont dépourvues de rainures transversales s'ouvrant dans deux rainures circonférentielles.

2. Pneu selon la revendication 1 **caractérisé en ce que** sa bande de roulement comprend une pluralité de rainures circonférentielles (43, 33, 35) en zigzag délimitant des nervures intermédiaires (3) et deux nervures de bords (4, 5) présentant une succession de pointes et de creux dans la direction circonférentielle, les protubérances (46, 36, 56) dans chaque rainure étant formés au niveau des pointes pour obstruer en partie la section transversale de la rainure circonférentielle considérée tandis que les entailles sont formées pour déboucher dans les creux.

3. Pneu selon l'une la revendication 1 ou la revendication 2 **caractérisé en ce que** les protubérances (46, 36, 56) ont des dimensions appropriées pour ne pas fléchir sous l'action d'un écoulement d'eau dans les rainures.

4. Pneu selon l'une des revendications 1 à 3 **caractérisé en ce que** le nombre de protubérances (46, 36, 56) par rainure est tel qu'au moins quatre protubérances et quatre entailles semi fermées soient présentes en permanence dans le contact avec la chaussée.

5. Pneu selon l'une des revendications 1 à 4 **caractérisé en ce que** le jeu fonctionnel entre chaque protubérance (46, 36, 56) et les parois de l'entaille semi fermée avec laquelle elle coopère est au total au moins égal à la largeur Lr de la rainure dans laquelle sont formées ces protubérances.

## Patentansprüche

1. Reifen für Lastkraftwagenachse, der eine Laufdecke (1) aufweist, deren Laufoberfläche vorgesehen ist, um mit einer Fahrbahn in Berührung zu kommen, wobei diese Laufdecke eine Mehrzahl umfänglicher Rillen (43, 33, 35) aufweist, die Zwischenrippen (3) abgrenzen, und zwei Randrippen (4, 5), wobei jede Rippe eine Mindestbreite Ln hat und zwei seitliche Wände sowie eine Berührungsfläche, die dazu bestimmt ist, mit einer Fahrbahn in Berührung zu kommen, aufweist, wobei jede umfängliche Rille (43, 33, 35) eine Mehrzahl von Vorsprüngen (46, 36, 56) aufweist, die vorspringend auf mindestens einer Seitenwand, die diese Rille abgrenzt, ausgebildet sind, um den Querschnitt der betreffenden umfänglichen Rille teilweise zu verschließen,
• wobei gegenüber jedem Vorsprung (46, 36, 56) auf der benachbarten Rippe, die die betreffende Rille abgrenzt, ein halb geschlossener Einschnitt (37, 37', 37", 57) mit axialer Länge La vorgesehen ist, die maximal gleich 60 % der Mindestbreite Ln dieser Rippe ist, wobei dieser halb geschlossene Einschnitt mit einer Breite Le maximal gleich der Breite Lr der Rille derart ausgerichtet ist, dass ein mittlerer Winkel B mindestens gleich 10 Grad mit der Hauptrichtung des Vorsprungs, mit dem dieser Einschnitt zusammenwirkt, gebildet wird,
• wobei jeder Vorsprung (46, 36, 56) den Querschnitt der Rille, in der er auf mindestens 30 % und höchstens 75 % der Oberfläche des Querschnitts ausgebildet ist, schließt,
• und wobei ein Funktionsspiel (J1, J2) zwischen dem Vorsprung (46, 36, 56) und den Wänden, die den halb geschlossenen Einschnitt (37, 37', 37", 57) abgrenzen, mit dem dieser Vorsprung zusammenwirken soll, um das Durchgehen von Flüssigkeit insbesondere bei einem Fahren auf einer mit Wasser beschichteten Fahrbahn zu erlauben, eingerichtet ist,
wobei diese Laufdecke **dadurch gekennzeichnet ist, dass**: die Zwischenrippen keine Querrillen aufweisen, die sich in zwei umfänglichen Rillen öffnen.

2. Reifen nach Anspruch 1, **dadurch gekennzeichnet, dass** seine Laufdecke eine Mehrzahl umfänglicher Rillen (43, 33, 35) im Zickzack aufweist, die Zwischenrippen (3) abgrenzen, und zwei Randrippen (4, 5), die eine Abfolge von Spitzen und Tälern in die Umfangsrichtung aufweisen, wobei die Vorsprünge (46, 36, 56) in jeder Rille auf dem Niveau der Spitzen ausgebildet sind, um den Querschnitt der betreffenden umfänglichen Rille teilweise zu schließen, während die Einschnitte ausgebildet sind, um in die Täler zu münden.

3. Reifen nach Anspruch 1 oder Anspruch 2, **dadurch gekennzeichnet, dass** die Vorsprünge (46, 36, 56) Maße haben, die geeignet sind, um unter der Einwirkung eines Fließens von Wasser in den Rillen nicht nachzugeben.

4. Reifen nach einem der Ansprüche 1 bis 3, **dadurch gekennzeichnet, dass** die Anzahl von Vorsprüngen (46, 36, 56) pro Rille derart ist, dass mindestens vier Vorsprünge und vier halb geschlossene Einschnitte ständig bei der Berührung mit der Fahrbahn gegenwärtig sind.

5. Reifen nach einem der Ansprüche 1 bis 4, **dadurch gekennzeichnet, dass** das Funktionsspiel zwischen jedem Vorsprung (46, 36, 56) und den Wänden des halb geschlossenen Einschnitts, mit dem er zusammenwirkt, insgesamt wenigstens gleich der Breite Lr der Rille, in der diese Vorsprünge ausgebildet sind, ist.

## Claims

1. Tyre for a heavy goods vehicle axle, comprising a tread (1) of which a tread surface is designed to come into contact with a roadway, this tread comprising a plurality of circumferential grooves (43, 33, 35) delimiting intermediate ribs (3) and two edge ribs (4, 5), each rib having a minimum width Ln and comprising two lateral walls and a contact face designed to come into contact with a roadway, each circumferential groove (43, 33, 35) comprising a plurality of protuberances (46, 36, 56) formed as a protrusion on at least one lateral call delimiting this groove in order to partly obstruct the cross section of the circumferential groove in question,
• facing each protuberance (46, 36, 56), on the adjacent rib delimiting the groove in question, a half-closed notch (37, 37', 37", 57) being provided having an axial length La at most equal to 60% of the minimum width Ln of this rib, this half-closed notch with a width Le at most equal to the width Lr of the groove being oriented so as to make an average angle B at least equal to 10 degrees with the main direction of the protuberance with which this notch interacts,
• each protuberance (46, 36, 56) closing the section of the groove in which it is formed over at least 30% and at most 75% of the surface of the said section,
• and a functional clearance (J1, J2) being arranged between the protuberance (46, 36, 56) and the walls delimiting the half-closed notch (37, 37', 37", 57) with which this protuberance is designed to interact, in order to allow the passage of fluid, notably when running on a water-covered roadway,
this tread being **characterized in that** the intermediate ribs have no transverse grooves opening into two circumferential grooves.

2. Tyre according to Claim 1, **characterized in that** its tread comprises a plurality of circumferential grooves (43, 33, 35) in zigzag form delimiting intermediate ribs (3) and two edge ribs (4, 5) having a succession of peaks and hollows in the circumferential direction, the protuberances (46, 36, 56) in each groove being formed at the peaks in order to partly obstruct the cross section of the circumferential groove in question while the notches are formed to lead into the hollows.

3. Tyre according to Claim 1 or according to Claim 2, **characterized in that** the protuberances (46, 36, 56) have dimensions that are appropriate for not flexing under the action of a flow of water in the grooves.

4. Tyre according to one of Claims 1 to 3, **characterized in that** the number of protuberances (46, 36, 56) for each groove is such that at least four protuberances and four half-closed notches are permanently present in contact with the roadway.

5. Tyre according to one of Claims 1 to 4, **characterized in that** the functional clearance between each protuberance (46, 36, 56) and the walls of the half-closed notch with which it interacts is in total at least equal to the width Lr of the groove in which these protuberances are formed.
